# EUROPEAN PATENT APPLICATION

(11) **EP 3 923 278 A2**
(43) Date of publication of application: **15.12.2021**
(21) Application number: 21204250.1
(22) Date of filing: 22.10.2021
(51) Int. Cl.: G10L 15/32, G10L 15/30, G10L 15/22, G10L 21/02

(54) **METHOD, APPARATUS, DEVICE, STORAGE MEDIUM AND PROGRAM FOR DETERMINING DISPLAYED TEXT RECOGNIZED FROM SPEECH**

(30) Priority: 13.11.2020 CN 202011270771
(71) Applicant: Apollo Intelligent Connectivity (Beijing) Technology Co., Ltd., Beijing 100176 (CN)
(72) Inventor: Wang, Zexiang, Beijing, 100085 (CN)
(74) Representative: Lucke, Andreas

(57) **Abstract**

Embodiments of the present disclosure provide a method, apparatus, device and storage medium for determining a displayed recognized text, and relate to the technical field of artificial intelligence, such as speech recognition and natural language processing. The method includes: determining a to-be-recognized data stream based on a collected data stream of user recording; performing local recognition on the to-be-recognized data stream to obtain an offline recognized text; performing online recognition on the to-be-recognized data stream to obtain an online recognized text; and determining a recognized text better representing a user intention between the online recognized text and the offline recognized text as a displayed recognized text based on a comparison result between the online recognized text and the offline recognized text. By adopting a solution in which the online recognition and the offline recognition are performed in parallel, both the speed of the offline recognition and the accuracy of the online recognition are fully realized, thereby solving the problem of slowly displaying the recognized text on the display and ensuring the recognition effect.

## Description

### TECHNICAL FIELD

The present disclosure relates to the field of computer technology, specifically, to the technical field of artificial intelligence, such as speech recognition and natural language processing, and in particular, to a method, apparatus, device, storage medium and program for determining a displayed recognized text.

### BACKGROUND

IVI refer to the abbreviation of in-vehicle infotainment products installed in the vehicles. IVI can realize the information communication between human and vehicles, and between vehicles and environment (vehicles and vehicles).

When IVI performs speech recognition processing on user recording data, only one of the online recognition using an online speech recognition server, and the offline recognition using a local speech recognition model can be used in one speech recognition. Some IVIs have significant delays in recorded data processing, transmission and video frame refresh. Generally, the delays of the recorded data processing reach 500~1000ms, and the delays of the video frame refresh reach 200∼300ms.

### SUMMARY

Embodiments of the present disclosure provide a method, apparatus, device, storage medium and program for determining a displayed recognized text.

According to a first aspect, an embodiment of the present disclosure provides a method for determining a displayed recognized text, and the method includes: determining a to-be-recognized data stream based on a collected data stream of user recording; performing local recognition on the to-be-recognized data stream to obtain an offline recognized text; performing online recognition on the to-be-recognized data stream to obtain an online recognized text; and determining a recognized text better representing a user intention from the online recognized text and the offline recognized text as a displayed recognized text based on a comparison result between the online recognized text and the offline recognized text.

According to a second aspect, an embodiment of the present disclosure provides an apparatus for determining a displayed recognized text, and the apparatus includes: a to-be-recognized data stream determination module configured to determine a to-be-recognized data stream based on a collected data stream of user recording; an offline recognition module configured to perform local recognition on the to-be-recognized data stream to obtain an offline recognized text; an online recognition module configured to perform online recognition on the to-be-recognized data stream to obtain an online recognized text; and a displayed recognized text determination module configured to determine a recognized text better representing a user intention from the online recognized text and the offline recognized text as a displayed recognized text based on a comparison result between the online recognized text and the offline recognized text.

According to a third aspect, an embodiment of the present disclosure provides an electronic device, and the electronic device includes: at least one processor; and a memory communicatively connected with the at least one processor, where the memory stores instructions executable by the at least one processor, and the instructions, when executed by the at least one processor, cause the at least one processor to execute the method as described in any of the implementations of the first aspect.

According to a fourth aspect, an embodiment of the present disclosure provides a non-transitory computer readable storage medium storing computer instructions, and the computer instructions are used to cause a computer to execute the method as described in any of the implementations of the first aspect.

According to a fifth aspect, an embodiment of the present disclosure provides a computer program including instructions which, when the program is executed by a computer, cause the computer to perform the method as described in any of the implementations of the first aspect.

According to the method, apparatus, device and storage medium for determining a displayed recognized text provided by the embodiments of the present disclosure, the to-be-recognized data stream is first determined based on the collected data stream of user recording; the local recognition is performed on the to-be-recognized data stream to obtain the offline recognized text; then, the online recognition is performed on the to-be-recognized data stream to obtain the online recognized text; and finally, the recognized text better representing the user intention between the online recognized text and the offline recognized text is determined as the displayed recognized text based on the comparison result between the online recognized text and the offline recognized text. By adopting a solution in which the online recognition and the offline recognition are performed in parallel, both the speed of the offline recognition and the accuracy of the online recognition are fully realized, thereby solving the problem of slowly displaying the recognized text on the display and ensuring the recognition effect.

It should be appreciated that the content described in this section is not intended to identify the key or critical features of embodiments of the present disclosure, nor is it intended to limit the scope of the present disclosure. The other features of the present disclosure will become easy to understand through the following description.

### BRIEF DESCRIPTION OF THE DRAWINGS

By reading the detailed description of non-limiting embodiments with reference to the following accompanying drawings, other features, objects and advantages of the present disclosure will become more apparent. The accompanying drawings are intended to provide a better understanding of the present disclosure and do not constitute a limitation to the present disclosure.
Fig. 1 is an example system architecture to which the present disclosure may be applied;
Fig. 2 is a flowchart of an embodiment of a method for determining a displayed recognized text according to the present disclosure;
Fig. 3 is a flowchart of another embodiment of the method for determining a displayed recognized text according to the present disclosure;
Fig. 4 is a schematic structural diagram of an embodiment of an apparatus for determining a displayed recognized text according to the present disclosure; and
Fig. 5 is a block diagram of an electronic device adapted to implement the method for determining a displayed recognized text according to an embodiment of the present disclosure.

### DETAILED DESCRIPTION OF EMBODIMENTS

The present disclosure will be further described below in detail in combination with the accompanying drawings and the embodiments. It should be appreciated that the specific embodiments described herein are merely used for explaining the relevant disclosure, rather than limiting the disclosure. In addition, it should be noted that, for the ease of description, only the parts related to the relevant disclosure are shown in the accompanying drawings.

It should be noted that the embodiments in the present disclosure and the features in the embodiments may be combined with each other on a non-conflict basis. The present disclosure will be described below in detail with reference to the accompanying drawings and in combination with the embodiments.

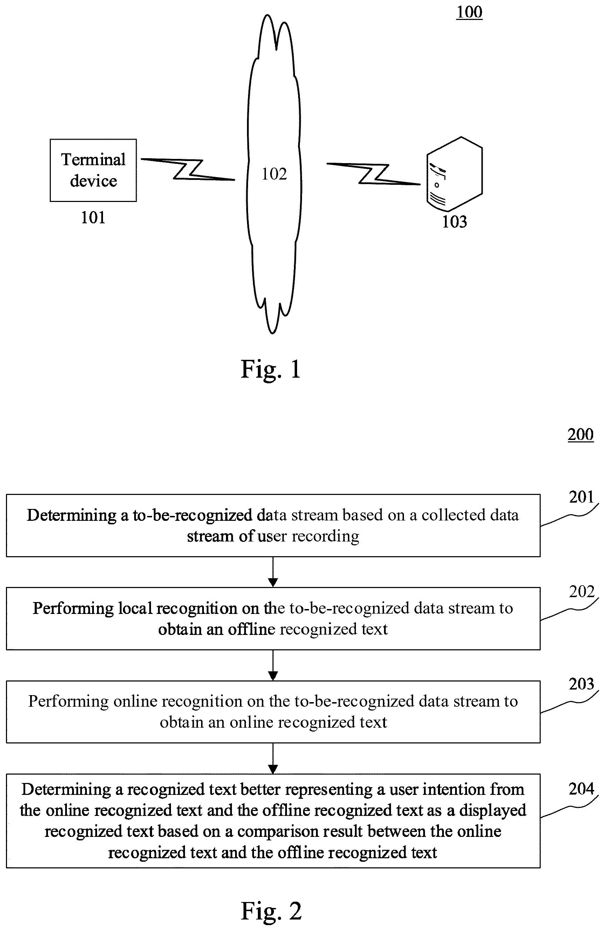

Fig. 1 shows an example system architecture 100 to which an embodiment of a method for determining a displayed recognized text or an apparatus for determining a displayed recognized text according to the present disclosure may be applied.

As shown in Fig. 1, the system architecture 100 may include a terminal device 101, a network 102 and a server 103. The network 102 serves as a medium for providing a communication link between the terminal device 101 and the server 103. The network 102 may include various types of connections, such as wired or wireless communication links, or optical fiber cables.

The terminal device 101 may interact with the server 103 through the network 102. A data stream of user recording, an offline recognized text and the like may be provided by the terminal device 101 including, but not limited to, an IVI and the like.

The server 103 may provide various services. For example, the server 103 may perform processing, for example analysis, on data such as the data stream of user recording and the offline recognized text acquired from the terminal device 101, and generate a processing result (such as determining a displayed recognized text).

It should be noted that the server 103 may be hardware or software. When the server 103 is hardware, the server 103 may be implemented as a distributed server cluster composed of multiple servers, or as a single server; and when the server 103 is software, the server 103 may be implemented as multiple software pieces or software modules (such as for providing distributed services), or as a single software piece or software module, which is not specifically limited herein.

It should be noted that the method for determining a displayed recognized text provided by the embodiments of the present disclosure is generally executed by the server 103. Correspondingly, the apparatus for determining a displayed recognized text is also generally arranged in the server 103.

It should be appreciated that the number of the terminal device, the network and the server in Fig. 1 is merely illustrative. Any number of terminal devices, networks and servers maybe provided according to actual requirements.

Further referring to Fig. 2, a flow 200 of an embodiment of a method for determining a displayed recognized text according to the present disclosure is shown. The method includes steps 201 to 204.

Step 201 includes determining a to-be-recognized data stream based on a collected data stream of user recording.

In this embodiment, the terminal device 101 shown in Fig. 1 may determine the to-be-recognized data stream based on the collected data stream of user recording.

A user speaks in an area monitored by a microphone, and the microphone monitors a user speech and generates a data stream of user recording, and then transmits the data stream of recording to the terminal device 101 through a link. The terminal device 101 includes a front-end processing module for performing front-end processing on the data stream of user recording before feature extraction, so that the processed data may reflect the essential features of the user speech better.

The front-end processing includes, but is not limited to, endpoint detection. Endpoint detection refers to distinguishing speech signal periods from non-speech signal periods in a data stream of user recording, and accurately determining a starting point of a speech signal. After the endpoint detection, subsequent processing may be performed on only the speech signal.

The to-be-recognized data stream may be a speech signal that has been processed by a front-end.

Step 202 includes performing local recognition on the to-be-recognized data stream to obtain an offline recognized text.

In this embodiment, the terminal device 101 shown in Fig. 1 may perform the local recognition on the to-be-recognized data stream to obtain the offline recognized text.

The to-be-recognized data stream may be sent to a local recognition engine to perform local recognition. The to-be-recognized data stream is then recognized through a local speech model to obtain the offline recognized text. The accuracy of offline recognition depends on the accuracy of the local speech model. A language model is trained with a large number of texts, and the statistical rules of a certain language may be used to help improving the recognition accuracy.

After the local recognition is performed on the to-be-recognized data stream and the offline recognized text is obtained, the offline recognized text may be sent to the server 103 through the network 102.

Step 203 includes performing online recognition on the to-be-recognized data stream to obtain an online recognized text.

In this embodiment, an execution body of the method for determining a displayed recognized text (such as the server 103 shown in Fig. 1) may perform the online recognition on the to-be-recognized data stream to obtain the online recognized text.

After receiving the to-be-recognized data stream uploaded by the terminal device 101, the execution body may transmit the to-be-recognized data stream to an online recognition engine to perform online recognition. The to-be-recognized data stream is then recognized through an online speech model to obtain the online recognized text. The online speech model may include an acoustic model and a language model. The acoustic model generally uses the HMM (Hidden Markov Model), and includes the BLSTM (Bi-directional Long Short-Term Memory) and the deep CNN (Convolutional Neural Network), and the fusion of different acoustic models helps to improve the recognition rate, such as the fusion of the BLSTM and the output layer of the deep CNN. The language model includes LSTM (Long Short-Term Memory), RNN (Recurrent Neural Network) and n-gram (where n is a positive integer).

Step 204 includes determining a recognized text better representing a user intention from the online recognized text and the offline recognized text as a displayed recognized text based on a comparison result between the online recognized text and the offline recognized text.

In this embodiment, the execution body may determine the recognized text better representing the user intention from the online recognized text and the offline recognized text as the displayed recognized text based on the comparison result between the online recognized text and the offline recognized text.

Since the embodiments of the present disclosure adopt an operation mode of performing the offline recognition and the online recognition in parallel, there may be two lines of recognized texts in the execution body at the same time, i.e., the online recognized text and the offline recognized text. Based on this, the execution body may arbitrate the online recognized text and the offline recognized text, and determine which line of the recognized text is more suitable for display on a display device, so that the user may obtain a better experience. Specifically, an arbitration mechanism may be arranged in the execution body, and the recognized texts of both the offline recognition and the online recognition are returned to the arbitration mechanism, and then the arbitration mechanism makes a determination based on a preset arbitration rule, and finally selects a recognized text from the recognized texts as the recognized text displayed on the display device.

The arbitration rule is that when the speech recognition accuracies of both the recognized texts reach the accuracy threshold value, the speed of displaying the recognized texts (i.e., the presentation on the display device) is preferentially considered; otherwise, the accuracies of the recognized texts are preferentially considered (i.e., the recognized text with greater speech recognition accuracy is preferentially displayed).

The arbitration rule may include determining the recognized text better representing the user intention from the online recognized text and the offline recognized text as the displayed recognized text based on the comparison result between the online recognized text and the offline recognized text. For example, if the similarity between the online recognized text and the offline recognized text is 100%, the offline recognized text is determined as the recognized text representing the user intention. For another example, if the similarity between the online recognized text and the offline recognized text is 0%, the online recognized text is determined as the recognized text representing the user intention.

According to the method for determining a displayed recognized text provided by the embodiments of the present disclosure, a way of fusing speech recognitions, in which only one of the online recognition and the offline recognition can be used in one speech recognition, and the online recognition and the offline recognition cannot be used in parallel at the same time, is broken through. By adopting the solution in which the online recognition and the offline recognition are performed in parallel, both the speed of the offline recognition and the accuracy of the online recognition are fully realized, thereby solving the problem of slowly displaying the recognized text on the display and ensuring the recognition effect.

In some alternative implementations of this embodiment, the step 202 further includes: displaying the offline recognized text on the display device, and the step 204 includes: maintaining, in response to the offline recognized text including the online recognized text, the offline recognized text displayed on the display device; and replacing, in response to the offline recognized text not including the online recognized text, the offline recognized text displayed on the display device with the online recognized text.

The display device may be integrated onto the terminal device 101. After determining the displayed recognized text, the execution body may output the displayed recognized text to the display device on the terminal device 101 for display. If the execution body determines that the displayed recognized text is the offline recognized text, the offline recognized text already displayed on the display device may be maintained; and if the execution body determines that the displayed recognized text is the online recognized text, the offline recognized text displayed on the display device may be replaced with the online recognized text.

The offline recognized text including the online recognized text may refer to a case that the online recognized text is the same as the offline recognized text, or refer to a case that the online recognized text is a word or a paragraph of the offline recognized text. For example, an online recognized text is "play music", and an offline recognized text is "I want to play music on my phone". It should be noted that the offline recognized text including the online recognized text may alternatively refer to a case that a word or words of the online recognized text is scattered in the offline recognized text. For example, the online recognized text is "play music", and an offline recognized text is "I want to play dynamic music on my phone."

Generally, the speech recognition accuracy of the online recognized text is greater than the accuracy threshold value. If the offline recognized text includes the online recognized text, the accuracy of the offline recognized text is also greater than the accuracy threshold value. Therefore, based on the arbitration rule of "when the speech recognition accuracies of both the recognized texts reach the accuracy threshold value, the speed of displaying the recognized texts (i.e., the presentation on the display device) is preferentially considered", the recognized text that is displayed faster on the display device is selected as the displayed recognized text. Since the offline recognized text is displayed on the display device after the step 202 is performed, the offline recognized text displayed on the display device may be maintained.

Alternatively, the offline recognized text including the online recognized text may refer to a case that the online recognized text is a word or a paragraph of the offline recognized text, and a length of the online recognized text is smaller than or equal to a length of the offline recognized text.

In some alternative implementations of this embodiment, the step 204 includes: determining, in response to the similarity between the offline recognized text and the online recognized text being smaller than a preset threshold value, the online recognized text as the displayed recognized text; and determining, in response to the similarity between the offline recognized text and the online recognized text being greater than or equal to the preset threshold value, the offline recognized text as the displayed recognized text.

Generally, the speech recognition accuracy of the online recognized text is greater than the accuracy threshold value. By determining the similarity between the offline recognized text and the online recognized text, whether the speech recognition accuracy of the offline recognized text is greater than the accuracy threshold value may be determined. Here, a threshold value may be preset for the similarity between the offline recognized text and the online recognized text, and the similarity threshold value is used to represent whether the speech recognition accuracy of the offline recognized text is greater than the accuracy threshold value. For example, assuming that the accuracy threshold value is 90% and the default speech recognition accuracy of the online recognized text is 100%, the similarity threshold value between the offline recognized text and the online recognized text may be set as 90%.

If the similarity between the offline recognized text and the online recognized text is smaller than the preset threshold value, and the accuracy of the offline recognized text does not reach the accuracy threshold value, the accuracies of the recognized texts are preferentially considered according to the arbitration rule, that is, the recognized text with greater speech recognition accuracy, i.e., the online recognized text, is preferentially displayed. If the similarity between the offline recognized text and the online recognized text is greater than or equal to the preset threshold value, and the accuracy of the offline recognized text reaches the accuracy threshold value, the speed of the recognized texts is preferentially considered according to the arbitration rule, that is, the recognized text that is displayed faster on the display device, i.e., the offline recognized text, is preferentially displayed.

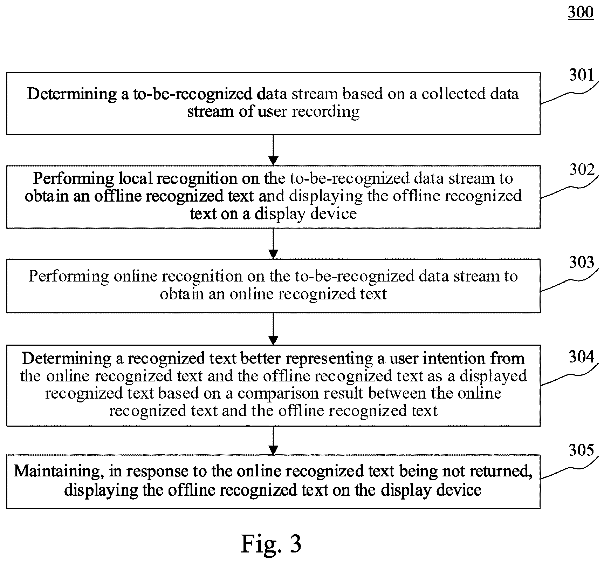

Further referring to Fig. 3, a flowchart of an embodiment of the method for determining a displayed recognized text is shown. The method includes steps 301 to 305.

Step 301 includes determining a to-be-recognized data stream based on a collected data stream of user recording.

Step 302 includes performing local recognition on the to-be-recognized data stream to obtain an offline recognized text and displaying the offline recognized text on a display device.

Step 303 includes performing online recognition on the to-be-recognized data stream to obtain an online recognized text.

Step 304 includes determining a recognized text better representing a user intention between the online recognized text and the offline recognized text as a displayed recognized text based on a comparison result between the online recognized text and the offline recognized text.

Step 305 includes maintaining, in response to the online recognized text being not returned, the offline recognized text displayed on the display device.

In this embodiment, the terminal device 101 shown in Fig. 1 may maintain, in response to the online recognized text being not returned, the offline recognized text displayed on the display device.

The online recognized text being not returned may be caused by exceptional reasons, such as poor network environment, network disconnection and a failure of an online speech recognition server. If the online recognized text is not returned due to an exceptional reason, the offline recognized text already displayed is determined as the displayed recognized text, thereby providing an exception processing mechanism.

In some alternative implementations of this embodiment, the step 201 includes performing preprocessing on the collected recording data stream to obtain the to-be-recognized data stream.

The preprocessing includes noise reduction, echo cancellation and reverberation cancellation. The flow of the noise reduction is as follows: the spectrum features of the background noise are stabilized, and the amplitude of the background noise is very stable at one or several spectra, and assuming that a small section of the background at the beginning of the data stream is the background noise, grouping and Fourier transform are performed from the starting of the background noise, and the spectrum of the noise is obtained by averaging these groups. The process of the noise reduction is to obtain a noise-reduced speech after reversely compensating a speech containing noise.

The echo cancellation includes dual-talk detection and delay estimation. For an echo cancellation module of a smart terminal, different strategies are used to update filters w1 and w2 by determining a current mode (close-talk mode, far-talk mode and dual-talk mode), and then the interference of a far-end is filtered out. On this basis, the interference of residual noise is removed through a post-filtering algorithm. There are generally two types of echo, i.e., an acoustic echo and a mixed echo. In a call, echoes are generated due to speech compression techniques and packet processing delays, and echo cancellation is often required to improve the quality of the call. The echo canceller monitors a speech from a far-end on a receiving path, calculates an estimate of an echo, and then subtracts the estimate on the transmit path, so that the echo is removed and only the speech at the near end is transmitted to the far-end.

Acoustically, a reflected wave whose delay time reaches about 50ms or more is called an echo, and the effect of other reflected waves is called reverberation which is divided into early reverberation and late reverberation. Since the early reverberation component contributes to improving the intelligibility of speech, more attention is paid to suppressing the late reverberation in the task of speech de-reverberation. The reverberation cancellation methods mainly include four types, i.e., a beamforming-based method, an inverse filtering-based method, a speech enhancement-based method, and a deep learning-based method.

The speech recognition accuracy may be improved by performing the preprocessing on the collected data stream of recording.

In some alternative implementations of this embodiment, the length of the offline recognized text is smaller than or equal to a preset threshold value. For example, a maximum number of words returned by the offline recognized text is limited to 12, thereby ensuring the speed of displaying the offline recognized text on the display.

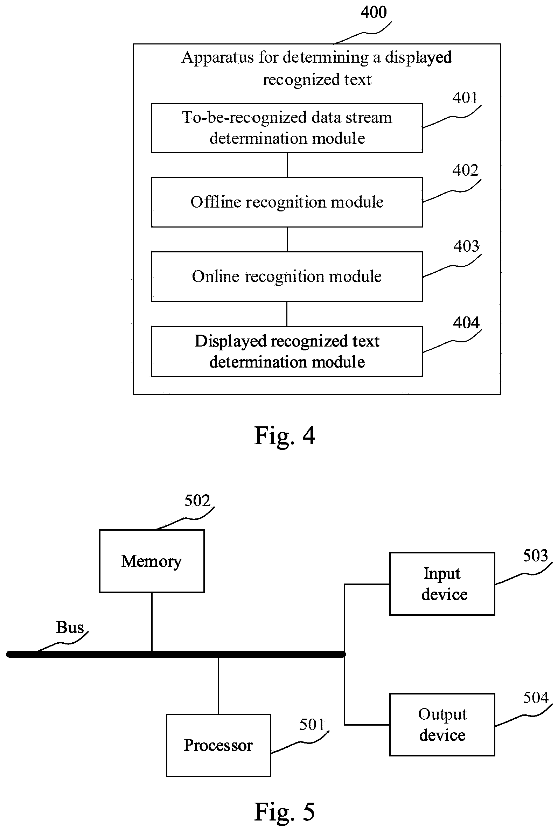

Further referring to Fig. 4, as an implementation of the method shown in the above figures, the present disclosure provides an embodiment of an apparatus for determining a displayed recognized text. The embodiment of the apparatus corresponds to the embodiment of the method shown in Fig. 2, and the apparatus is particularly applicable to various electronic devices.

As shown in Fig. 4, the apparatus 400 for determining a displayed recognized text of this embodiment includes: a to-be-recognized data stream determination module 401, an offline recognition module 402, an online recognition module 403 and a displayed recognized text determination module 404. The to-be-recognized data stream determination module 401 is configured to determine a to-be-recognized data stream based on a collected data stream of user recording; the offline recognition module 402 is configured to perform local recognition on the to-be-recognized data stream to obtain an offline recognized text; the online recognition module 403 is configured to perform online recognition on the to-be-recognized data stream to obtain an online recognized text; and the displayed recognized text determination module 404 is configured to determine a recognized text better representing a user intention from the online recognized text and the offline recognized text as a displayed recognized text based on a comparison result between the online recognized text and the offline recognized text.

In this embodiment, the specific processing of the to-be-recognized data stream determination module 401, the offline recognition module 402, the online recognition module 403 and the displayed recognized text determination module 404 of the apparatus 400 for determining a displayed recognized text and the technical effects thereof may be described with reference to the related description of steps 201 to 204 in the embodiment corresponding to Fig. 2, and are thus not repeated herein.

In some alternative implementations of this embodiment, the offline recognition module further includes: a display module configured to display the offline recognized text on a display device; and the displayed recognized text determination module is further configured to: maintain, in response to the offline recognized text including the online recognized text, the offline recognized text displayed on the display device.

In some alternative implementations of this embodiment, the displayed recognized text determination module is further configured to: replace, in response to the offline recognized text not including the online recognized text, the offline recognized text displayed on the display device with the online recognized text.

In some alternative implementations of this embodiment, the displayed recognized text determination module is further configured to: determine, in response to a similarity between the offline recognized text and the online recognized text being smaller than a preset threshold value, the online recognized text as the displayed recognized text.

In some alternative implementations of this embodiment, the displayed recognized text determination module is further configured to: determine, in response to the similarity between the offline recognized text and the online recognized text being greater than or equal to the preset threshold value, the offline recognized text as the displayed recognized text. In some alternative implementations of this embodiment, a length of the online recognized text is smaller than or equal to a length of the offline recognized text.

In some alternative implementations of this embodiment, the apparatus further including: an exception processing module configured to maintain, in response to the online recognized text being not returned, the offline recognized text displayed on the display device.

In some alternative implementations of this embodiment, the to-be-recognized data stream determination module is further configured to: perform preprocessing on the collected data stream of recording to obtain the to-be-recognized data stream.

In some alternative implementations of this embodiment, the preprocessing includes any one of noise reduction, echo cancellation and reverberation cancellation.

In some alternative implementations of this embodiment, the length of the offline recognized text is smaller than or equal to a preset threshold value.

Fig. 5 is a block diagram of an electronic device adapted to implement the method for determining a displayed recognized text according to an embodiment of the present disclosure. The electronic device is intended to represent various forms of digital computers, such as laptops, desktops, worktables, personal digital assistants, servers, blade servers, mainframe computers and other suitable computers. The electronic device may also represent various forms of mobile devices, such as personal digital processing, cellular phones, smart phones, wearable devices and other similar computing devices. The parts, their connections and relationships, and their functions shown herein are examples only, and are not intended to limit the implementations of the present disclosure as described and/or claimed herein.

As shown in Fig. 5, the electronic device includes one or more processors 501, a memory 502 and interfaces for connecting components, including a high-speed interface and a low-speed interface. The components are interconnected by using different buses and may be mounted on a common motherboard or otherwise as required. The processor may process instructions executed within the electronic device, including instructions stored in memory or on memory to display graphical information of the GUI on an external input or output device (such as a display device coupled to an interface). In other embodiments, multiple processors and/or multiple buses and multiple memories may be used with multiple memories, if required. Similarly, multiple electronic devices may be connected (for example, used as a server array, a set of blade servers or a multiprocessor system), and the electronic device provides some of the necessary operations. An example of a processor 501 is shown in Fig. 5.

The memory 502 is a non-transitory computer readable storage medium according to the present disclosure. The memory stores instructions executable by at least one processor to cause the at least one processor to execute the method for determining a displayed recognized text according to the present disclosure. The non-transitory computer readable storage medium of the present disclosure stores computer instructions for causing a computer to execute the method for determining a displayed recognized text according to the present disclosure.

As a non-transitory computer readable storage medium, the memory 502 may be used to store non-transitory software programs, non-transitory computer executable programs and modules, such as the program instructions or modules corresponding to the method for determining a displayed recognized text in the embodiment of the present disclosure (for example, the to-be-recognized data stream determination module 401, the offline recognition module 402, the online recognition module 403 and the displayed recognized text determination module 404 shown in Fig. 4). The processor 501 runs the non-transitory software programs, instructions and modules stored in the memory 502 to execute various functional applications and data processing of the server, thereby implementing the method for determining a displayed recognized text in the embodiment of the method.

The memory 502 may include a storage program area and a storage data area, where the storage program area may store an operating system and an application program required by at least one function; and the storage data area may store data created by the electronic device when executing the method for determining a displayed recognized text. In addition, the memory 502 may include a high-speed random access memory, and may further include a non-transitory memory, such as at least one magnetic disk storage device, a flash memory or other non-transitory solid state storage devices. In some embodiments, the memory 502 may alternatively include a memory disposed remotely relative to the processor 501, which may be connected through a network to the electronic device adapted to execute the method for determining a displayed recognized text. Examples of such networks include, but are not limited to, the Internet, enterprise intranets, local area networks, mobile communication networks and combinations thereof.

The electronic device adapted to execute the method for determining a displayed recognized text may further include an input device 503 and an output device 504. The processor 501, the memory 502, the input device 503 and the output device 504 may be interconnected through a bus or other means, and an example of a connection through a bus is shown in Fig. 5.

The input device 503 may receive input digit or character information, and generate key signal input related to user settings and functional control of the electronic device adapted to execute the method for determining a displayed recognized text, such as a touch screen, a keypad, a mouse, a track pad, a touch pad, a pointer bar, one or more mouse buttons, a trackball or a joystick. The output device 504 may include a display device, an auxiliary lighting device (such as an LED) and a tactile feedback device (such as a vibration motor). The display device may include, but is not limited to, a liquid crystal display (LCD), a light emitting diode (LED) display and a plasma display. In some embodiments, the display device may be a touch screen.

The various embodiments of the systems and technologies described herein may be implemented in digital electronic circuit systems, integrated circuit systems, ASICs (application specific integrated circuits), computer hardware, firmware, software and/or combinations thereof. The various embodiments may include: being implemented in one or more computer programs, where the one or more computer programs may be executed and/or interpreted on a programmable system including at least one programmable processor, and the programmable processor maybe a dedicated or general-purpose programmable processor, which may receive data and instructions from a memory system, at least one input device and at least one output device, and send the data and instructions to the memory system, the at least one input device and the at least one output device.

These computing programs (also known as programs, software, software applications or code) include machine instructions of a programmable processor and may be implemented in high-level procedures and/or object-oriented programming languages, and/or assembly or machine languages. As used herein, the terms "machine readable medium" and "computer readable medium" refer to any computer program product, device and/or apparatus (such as magnetic disk, optical disk, memory and programmable logic device (PLD)) for providing machine instructions and/or data to a programmable processor, including a machine readable medium that receives machine instructions as machine readable signals. The term "machine readable signal" refers to any signal used to provide machine instructions and/or data to a programmable processor.

To provide interaction with a user, the systems and technologies described herein may be implemented on a computer having: a display device (such as a CRT (cathode ray tube) or LCD (liquid crystal display) monitor) for displaying information to the user; and a keyboard and a pointing device (such as a mouse or a trackball) through which the user may provide input to the computer. Other types of devices may also be used to provide interaction with the user. For example, the feedback provided to the user may be any form of sensory feedback (such as visual feedback, auditory feedback or tactile feedback); and input from the user may be received in any form, including acoustic input, speech input or tactile input.

The systems and technologies described herein may be implemented in: a computing system including a background component (such as a data server), or a computing system including a middleware component (such as an application server), or a computing system including a front-end component (such as a user computer having a graphical user interface or a web browser through which the user may interact with the implementation of the systems and technologies described herein), or a computing system including any combination of such background component, middleware component or front-end component. The components of the system may be interconnected by any form or medium of digital data communication (such as a communication network). Examples of communication networks include a local area network (LAN), a wide area network (WAN), and the Internet.

The computer system may include a client and a server. The client and the server are typically remote from each other and typically interact through a communication network. The relationship between the client and the server is generated by a computer program running on the corresponding computer and having a client-server relationship with each other.

According to the technical solutions of the present disclosure, the to-be-recognized data stream is first determined based on the collected data stream of user recording; the local recognition is performed on the to-be-recognized data stream to obtain the offline recognized text; then, the online recognition is performed on the to-be-recognized data stream to obtain the online recognized text; and finally, the recognized text better representing the user intention is determined from the online recognized text and the offline recognized text as the displayed recognized text based on the comparison result between the online recognized text and the offline recognized text. By adopting a solution in which the online recognition and the offline recognition are performed in parallel, both the speed of the offline recognition and the accuracy of the online recognition are fully realized, thereby solving the problem of slowly displaying the recognized text on the display and ensuring the recognition effect.

Artificial intelligence is a discipline of making computers simulate certain human thinking processes and intelligent behaviors (such as learning, reasoning, thinking and planning), including both hardware-level technologies and software-level technologies. Artificial intelligence hardware technologies generally include technologies, such as sensors, dedicated artificial intelligence chips, cloud computing, distributed storage and big data processing. Artificial intelligence software technologies mainly include technologies, such as computer vision technologies, speech recognition technologies, natural language processing technologies, machine learning or deep learning, big data processing technologies and knowledge graph technologies.

It should be appreciated that the steps of reordering, adding or deleting may be executed using the various forms shown above. For example, the steps described in the present disclosure may be executed in parallel or sequentially or in a different order, so long as the expected results of the technical solutions provided in the present disclosure may be realized, and no limitation is imposed herein.

The above specific implementations are not intended to limit the scope of the present disclosure. It should be appreciated by those skilled in the art that various modifications, combinations, sub-combinations, and substitutions maybe made depending on design requirements and other factors. Any modification, equivalent and modification that fall within the spirit and principles of the present disclosure are intended to be included within the scope of the present disclosure.

## Claims

1. A method for determining a displayed recognized text, the method comprising:
determining (201) a to-be-recognized data stream based on a collected data stream of user recording;
performing (202) a local recognition on the to-be-recognized data stream to obtain an offline recognized text;
performing (203) an online recognition on the to-be-recognized data stream to obtain an online recognized text; and
determining (204) a recognized text better representing a user intention from the online recognized text and the offline recognized text as a displayed recognized text based on a comparison result between the online recognized text and the offline recognized text.

2. The method according to claim 1, wherein the performing a local recognition on the to-be-recognized data stream to obtain an offline recognized text, further comprises:
displaying the offline recognized text on a display device; and
the determining a recognized text better representing a user intention from the online recognized text and the offline recognized text as a displayed recognized text based on a comparison result between the online recognized text and the offline recognized text, comprises:
maintaining (305), in response to the offline recognized text comprising the online recognized text, the offline recognized text displayed on the display device.

3. The method according to claim 1 or 2, wherein a length of the online recognized text is smaller than or equal to a length of the offline recognized text.

4. The method according to claim 2 or 3, wherein the determining a recognized text better representing a user intention from the online recognized text and the offline recognized text as a displayed recognized text based on a comparison result between the online recognized text and the offline recognized text, comprises:
replacing, in response to the offline recognized text not comprising the online recognized text, the offline recognized text displayed on the display device with the online recognized text.

5. The method according to any one of claim 1 to 4, wherein the determining a recognized text better representing a user intention from the online recognized text and the offline recognized text as a displayed recognized text based on a comparison result between the online recognized text and the offline recognized text, comprises:
determining, in response to a similarity between the offline recognized text and the online recognized text being smaller than a preset threshold value, the online recognized text as the displayed recognized text.

6. The method according to claim 5, wherein the determining a recognized text better representing a user intention from the online recognized text and the offline recognized text as a displayed recognized text based on a comparison result between the online recognized text and the offline recognized text, comprising:
determining, in response to the similarity between the offline recognized text and the online recognized text being greater than or equal to the preset threshold value, the offline recognized text as the displayed recognized text.

7. The method according to claim 2, wherein the method further comprises:
maintaining, in response to the online recognized text being not returned, the offline recognized text displayed on the display device.

8. The method according to any one of claims 1 to 7, wherein the determining a to-be-recognized data stream based on a collected data stream of recording, comprises:
performing preprocessing on the collected recording data stream to obtain the to-be-recognized data stream.

9. The method according to claim 8, wherein the preprocessing comprises any one of:
noise reduction, echo cancellation and reverberation cancellation.

10. The method according to any one of claims 1 to 9, wherein a length of the offline recognized text is smaller than or equal to a preset threshold value.

11. An apparatus for determining a displayed recognized text, wherein the apparatus comprises modules for performing the method according to any one of claims 1 to 10.

12. An electronic device, comprising:
at least one processor; and
a memory communicatively connected with the at least one processor, wherein the memory stores instructions executable by the at least one processor, and the instructions, when executed by the at least one processor, cause the at least one processor to execute the method according to any one of claims 1 to 10.

13. A non-transitory computer readable storage medium storing computer instructions, wherein the computer instructions, when executed by a computer, cause the computer to execute the method according to any one of claims 1 to 10.

14. A computer program comprising instructions which, when the program is executed by a computer, cause the computer to perform the method according to any one of claims 1 to 10.
